# EUROPEAN PATENT SPECIFICATION

(11) **EP 1 329 422 B1**
(45) Date of publication and mention of the grant of the patent: **29.03.2006**
(21) Application number: 03250380.7
(22) Date of filing: 22.01.2003
(51) Int. Cl.: C02F 1/02

(54) **Liquid purification method and apparatus**
Vorrichtung und Verfahren für die Reinigung von Flüssigkeit
Appareil et procédé pour la purification de liquide

(30) Priority: 22.01.2002 GB 0201351
(43) Date of publication of application: 23.07.2003
(73) Proprietor: IMI VISION LIMITED, Alcester, Warwickshire B49 6EU (GB)
(72) Inventor: Simmons, Philip Andrew, Alcester, Warwickshire B59 5DA (GB)
(74) Representative: Wightman, David Alexander

(56) References cited:
- US-A- 5 628 897

## Description

This invention relates to a method and apparatus for the purification of liquids, and particularly, but not exclusively to the purification of water.

It is well known to render water safer by boiling or distillation or filtration. However, boiling and distillation are energy intensive methods. Moreover, mere boiling will not remove solids and distillation in particular tends to lead to the removal of all trace minerals that can be undesirable. Filtration requires frequent filter replacement in order to avoid the filter itself acting as a breeding ground for micro-organisms and thus actually increasing their population in the liquid. Other purification techniques are known such as reverse osmosis but often use a lot of water.

It is an object of this invention to mitigate these disadvantages.

It is a further desired object of this invention to provide a method of improving water quality and an apparatus for carrying out the method to provide a supply of purified water for any desired end use.

It is yet another preferred object of this invention to provide a method of improving water quality and an apparatus for carrying out the method that is relatively simple to operate.

It is a still further object of the present invention to provide a method of improving water quality and an apparatus for carrying out the method that may use less water than existing techniques such as reverse osmosis.

Other objects and advantages of the invention will be apparent from the description hereinafter.

According to one aspect of the invention, there is provided a liquid purification method which comprises providing a container having a lower section and an upper section separated by a filter, supplying liquid to the lower section, heating the liquid in the lower section to produce a vapour for passage through the filter, wherein a pressure differential is generated across the filter between the lower section and the upper section such that a portion of the vapour creates a pocket of vapour in the lower section below the filter and the remaining portion passes through the filter and is at least partially condensed in the upper section, and controlling the size of the vapour pocket while maintaining a volume of liquid to be heated in the lower section, and withdrawing liquid from the upper section.

While the invention is applicable to the processing of liquids other than water, it is believed that it is in the field of water purification that the greatest use and advantage will lie, and the invention will accordingly hereinafter be described with reference to water alone.

By this invention, the water in the upper section above the filter is heated by steam generated in the lower section that passes through the filter and condenses in the water above the filter. In this way, the water above the filter is heated to an elevated temperature and kept hot enough to kill any bacteria by the condensation of steam passing through the filter. Moreover, the filter itself is maintained substantially sterile since it is bathed in steam. The resulting purified water in the upper section can be drawn of for immediate use and/or stored in a reservoir for later use. As a result, the invention requires the use of less energy than a pure distillation process since only the water below the filter needs to be converted to steam and then re-condensed to heat the water above the filter without directly heating the water above the filter.

In a preferred arrangement, the method includes positioning a heater in the lower section for directly heating the water below the filter and controlling the size of the steam pocket below the filter so the heater is covered by the water. As a result, overheating of the heater is prevented reducing the risk of premature failure of the heater.

The size of the steam pocket may be controlled in various ways. The principal way is to match the flow of incoming water to the lower section to the mass flow through the filter once a desired size of steam pocket has been achieved.

The rate of mass flow through the filter is in turn dependent on the pressure differential across the filter and this can be controlled by adjusting the power of the heater to alter the pressure below the filter. For example, increasing the power of the heater accelerates boiling of the water in the lower section and thus the rate of steam generation which in turn increases the pressure below the filter. Similarly, reducing the power of the heater slows down boiling of the water in the lower section and thus the rate of steam generation which in turn reduces the pressure below the filter. Alternatively or additionally, the pressure differential across the filter can be controlled by lowering the pressure above and/or below the filter, for example by appropriate valves.

The invented method has application to the production of purified water in the upper section by both batch and continuous processes. In a batch process, the container may be initially filled with water to an upper level in the upper section and, when the water in the upper section is heated to a pre-determined temperature for a time sufficient to kill any bacteria by steam passing through the filter from the lower section, the water in the upper section may be drawn off to a lower level at which water is introduced to the lower section. For such operation, the incoming water flow is on/off in dependence on upper and lower levels of water in the upper section and the size of the steam pocket may be controlled between upper and lower limits to accommodate the transfer of water in the form of steam vapour passing through the filter from the lower section to the upper section and ensure the heating element remains covered by water in the lower section.

In a continuous process, the container may be initially filled to a pre-determined level in the upper section and, when the water in the upper section is heated to a pre-determined temperature for a time sufficient to kill any bacteria by steam passing through the filter from the lower section, the water in the upper section may be drawn off and water introduced to the lower section. For such operation, the incoming water flow is continuous in dependence on the rate water is drawn off from the upper section and the size of the steam pocket may again be controlled between upper and lower limits to accommodate the transfer of water in the form of steam vapour passing through the filter from the lower section to the upper section and ensure the heating element remains covered by water in the lower section.

According to another aspect of the invention, there is provided apparatus for carrying out the method comprising a container having a lower section and an upper section separated by a filter, an inlet for supplying liquid to the lower section, an outlet for withdrawing liquid from the upper section, means for heating liquid in the lower section to produce a vapour for passage through the filter in dependence on a pressure differential generated across the filter such that a portion of the vapour creates a pocket of vapour in the lower section below the filter and the remaining portion passes through the filter and is at least partially condensed in the upper section, and means for controlling the size of the vapour pocket while maintaining a volume of liquid to be heated in the lower section.

According to a further aspect of the invention, there is provided a method of purifying a liquid comprising providing a first volume of liquid to be heated by heating means submerged in the liquid to generate a vapour, providing a second volume of liquid to be heated by the vapour, and providing a barrier permeable to the vapour between the first and second volumes such that a vapour pocket is created below the barrier without exposing the heating means.

According to yet another aspect of the invention, there is provided a method of producing purified water comprising providing a container having a lower section and an upper section separated by a filter, an inlet for introducing water to be purified to the lower section, an outlet for withdrawing purified water from the upper section, heating means in the lower section for heating water in the lower section to generate steam for passing through the filter to re-condense in and heat the water in the upper section, and controlling the generation of steam so that a steam pocket is formed in the lower section below the filter without exposing the heating means.

Preferred embodiments of the invention will now be described with reference to the accompanying drawings in which:
**Figures 1 and 2** are diagrammatic views of a first embodiment of apparatus for carrying out the method according to the invention showing the upper and lower water levels in the upper section for controlling the inflow of water to the lower section;
**Figure 3** is a diagrammatic view, similar to Figures 1 and 2, showing the operation of the apparatus for heating water in the upper section with steam generated in the lower section;
**Figures 4 to 6** are diagrammatic views, similar to Figures 1 to 3, showing a second embodiment of apparatus for carrying out the method according to the invention; and
**Figure 7** is a diagrammatic view showing a modification to the apparatus of Figures 1 to 3.

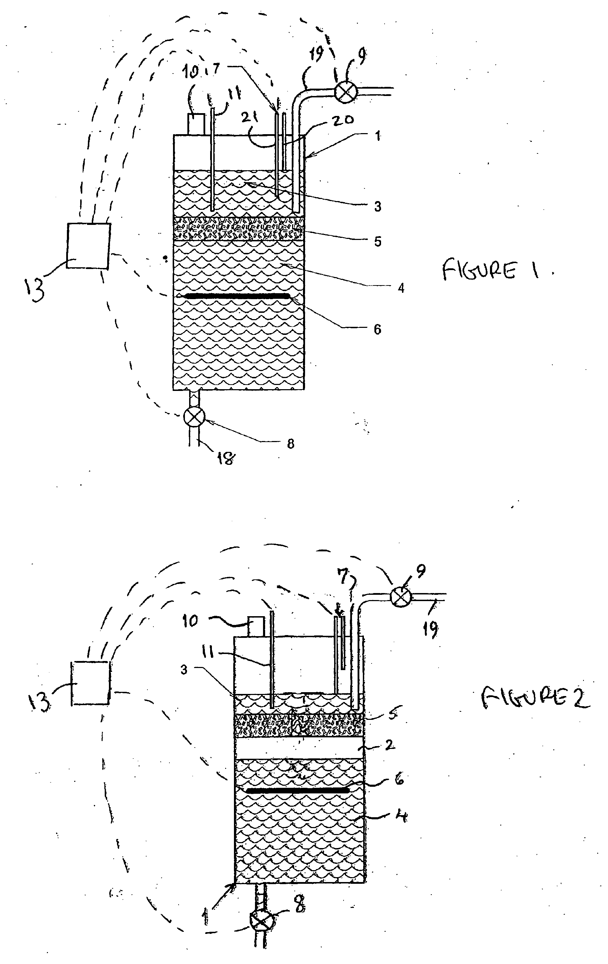

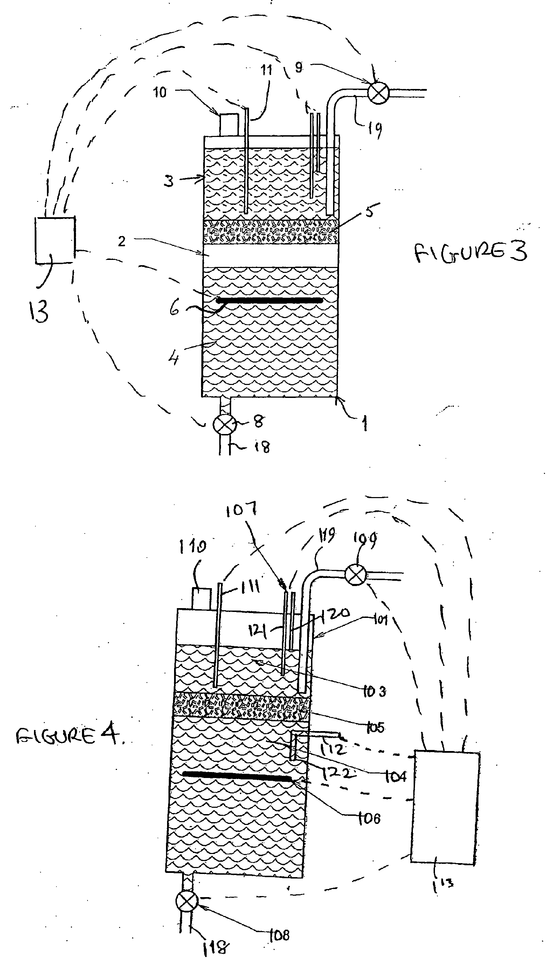

Referring first to Figures 1 and 2 of the drawings, there is shown water purification apparatus comprising a container 1 divided into an upper section 3 and a lower section 4 by a filter 5.

A heater 6 is disposed in the lower section 4 below the filter 5. In this embodiment, the heater 6 is electrically powered and comprises a single heating element having a power of 1500 watts. The power of the heater 6 may be varied by adjusting the voltage applied to the heating element. Alternatively or additionally, the heater 6 may comprise a plurality of heating elements that can be switched on or off separately or in combination to vary the power of the heater 6.

An inlet conduit 18 equipped with a valve 8 is provided for introducing water into the lower section 4 and an outlet conduit 19 having a valve 9 is provided for drawing water off from the upper section 3. Means 7 is provided for monitoring the level of water in the upper section 3 and comprises a pair of sensors 20,21. The sensor 20 detects the water level when the apparatus is filled prior to heating the water, and the sensor 21 detects a minimum water level in response to water being drawn off through the outlet conduit 19.

The apparatus is further provided with a pressure relief valve 10 in the upper section 3 for releasing excess pressure, a temperature sensor 11 for monitoring water temperature in the upper section 3 and a microprocessor control system 13 for controlling operation of the apparatus in response to signals received from the level sensors 20,21 and temperature sensor 11.

The pressure relief valve 10 is operable to open and close automatically to relieve excess pressure in the upper section 3 and remove undesirable volatile liquids allowing the steam transfer process to continue. The temperature sensor 11 is operable to provide a signal representative of the water temperature to the control system 13 when the water temperature is sufficient for purified water to be drawn off from the upper section 3.

In operation, control system 13 opens inlet valve 8 and water flows into the lower section 4 of the container 1, up through the filter 5 and into the upper section 3. The inlet valve 8 is closed by the control system 13 in response to a signal from sensor 20 that the water level in the upper section has reached the desired level as shown in Figure 1.

The heater 6 is then switched on by the control system 13 to heat the water in the lower section 4. The power of the heater 6 is chosen according to the volume of the water in the lower section 4 so that the temperature of the water can be rapidly increased to cause the water to boil. At this point, the water in the upper section 3 which is not directly heated by the heater 6 is still substantially below boiling point.

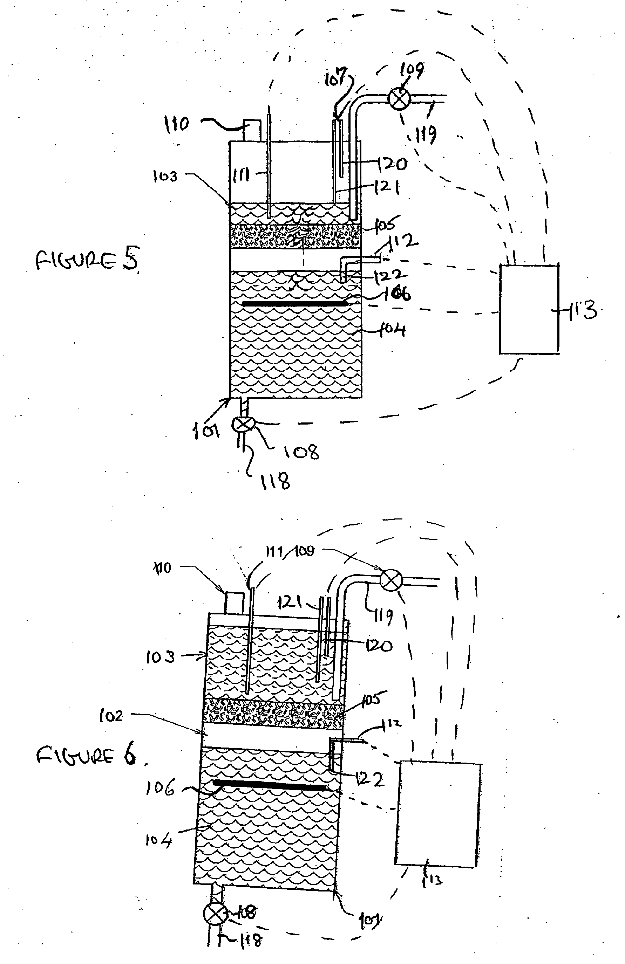

As the water boils, steam is formed and passes through the filter 5. The heating of the water in the lower section 4 increases the steam pressure below the filter 5 more rapidly than the steam pressure is released by steam escaping through the filter 5. Consequently, a steam pocket 2 forms below the filter 5 due to the differential pressure across the filter 5 as shown in Figure 3.

The steam forced through the filter 5 re-condenses in, and warms rapidly, the water in the upper section 3 increasing the level of the water in the upper section 3 above the upper level set by sensor 20 on filling the container 1. Due to the vigorous boiling action below the filter 5, water in the lower section 4 may splash on the underside of the filter 5 and may be carried through the filter 5 by the steam.

Sensor 11 monitors the temperature of the water in the upper section 3 and, when the water is heated to a pre-determined temperature for a time sufficient to kill any bacteria, control system 13 opens valve 9 and allows purified water to be drawn off from the upper section 3 in pipe 19. The water drawn off may be used immediately for any desired purpose or may be stored, for example in a reservoir, for later use.

The water level in the upper section 3 falls as water is drawn off and, when the water level reaches the lower level determined by sensor 21, the control system closes outlet valve 9 and opens inlet valve 8 to allow water to be introduced to the lower section 4 in pipe 18. The boiling action is temporarily stopped by the introduction of cooler water and the container is re-filled to the upper level set by sensor 20 in the upper section 3. The cycle is then repeated to produce purified water in the upper section as previously described.

In accordance with the present invention, the position of the heater 6 and operation of the apparatus is such that a sufficient level of water is maintained in the lower section 4 to cover the heating element. More particularly, the steam pocket 2 is prevented from growing in size sufficiently to expose the heating element by matching the flow of incoming water to the mass flow of water in the form of steam through the filter to maintain the size of the steam pocket between upper and lower limits and keep the heating element covered by water in the lower section. In this way, overheating causing the heating element to burn out and resulting in premature failure of the heater 6 is avoided.

In quiet periods, the heater 6 is operable in a stand-by mode to maintain the water in the lower section 4 at a temperature of about 85°C. In this way, the water can be rapidly heated to re-start the process when there is a demand for purified water. During these quiet periods, the pressure differential across the filter 5 falls as steam is no longer being generated and the steam pocket 2 reduces in size. The steam pocket 2 does not disappear altogether and, when the process is re-started, the steam pocket 2 increases in size again as steam is generated to increase the pressure differential across the filter 5.

The above-described operation is suitable for a batch process for the production of purified water.

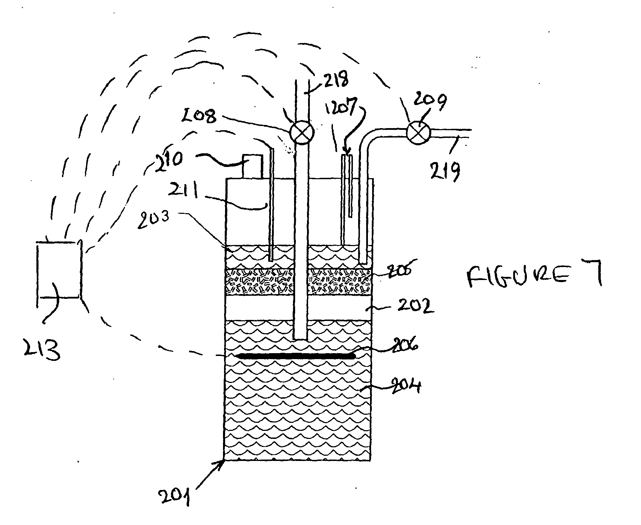

Referring now to Figures 4 to 6, a second embodiment of the invention is shown in which like reference numerals in the series 100 are used to indicate parts corresponding to the first embodiment.

In this embodiment, additional means 112 is provided including a sensor 122 for monitoring the level of water in the lower section and thus the size of the steam pocket 102. The control system 113 receives a signal from the sensor 122 when the level of the water in the lower section 104 falls to a pre-determined minimum level and switches the heater 106 off or reduces the power of the heater 106.

The height of the pre-determined minimum water level is above the height of the heater 106 within the lower section 104. Switching the heater 106 off causes the rate at which steam is formed in the lower section 104 to fall reducing the pressure differential across the filter 106 and preventing further increase in the size of the steam pocket 102.

At about the same time, the control system 113 opens valve 108 to allow more water to be introduced into the lower section 4 and shortly after switches the heater 106 back on again. By switching the heater on and off in response to the water level in the lower section 104 and by introducing water into the lower section, the size of the steam pocket 102 can be controlled so that the heater 106 is always surrounded by water when switched on.

The control system 113 may be operable to vary the power output of the heater 106 rather than switch the heater on and off during a heating cycle so as to control the size of the steam pocket 102 and maintain the level of water in the lower section 104 within a pre-determined range after the initial filling of the container.

When the water in the upper section 103 is heated to a pre-determined temperature for a time sufficient to kill any bacteria, the valve 109 is opened by the control system 113 in response to a signal from temperature sensor 111 allowing purified water to be drawn off from the upper section 103 in conduit 119. Purified water drawn off from the upper section 103 may be used immediately or transferred to a reservoir (not shown) for storage until required for end use.

The control system 113 is operable to close the valve 109 if the water level in the upper section falls to the minimum level in response to a signal from sensor 121 and open valve 108 to introduce cooler water into the lower section 104.

By controlling the valves 108,109 and the heater 106, the apparatus can be operated to provide either a continuous or a batch process for purifying water for any desired end use.

In quiet periods, the heater 106 is operable in a stand-by mode to maintain the water in the lower section 104 at a temperature of about 85°C. In this way, the water can be rapidly heated to re-start the process when there is a demand for purified water.

During these quiet periods, the pressure differential across the filter 105 falls as steam is no longer being generated and the steam pocket 102 reduces in size. The steam pocket 102 does not disappear altogether and, when the process is re-started, the steam pocket 102 increases in size again as steam is generated to increase the pressure differential across the filter 105.

Figure 7 shows a modification to the apparatus of Figures 1 to 3 in which like reference numerals in the series 200 are used to indicate corresponding parts. In this embodiment, inlet conduit 218 is arranged to pass through the upper section 203 whereby the incoming cold water to the lower section 204 is pre-heated by heat exchange with the water in the upper section 203. This enhances thermal efficiency of the process, and assists in the condensation of steam in the upper section 203. A similar modification may be employed in the apparatus of Figures 4 to 6.

In another modification (not shown), the pressure differential across the filter may be adjusted to control the size of the stream pocket by controlling the pressure in the upper section and/or the lower section. For example, valves may be provided for releasing pressure in the upper section and/or lower section under the control of the control system in response to the water level in the lower section.

It will be understood that the invention is not limited to the embodiments above-described and that various modifications can be made without departing from the concept of controlling the size of the steam pocket generated to prevent the heater being exposed above the water level in the lower section, as defined in the claims.

## Claims

1. A liquid purification method which comprises providing a container (1;101;201) having a lower section (4;104;204) and an upper section (3;103;203) separated by a filter (5;105;205), supplying liquid to the lower section (4;104;204), heating the liquid in the lower section (4;104;204) to produce a vapour for passage through the filter (5;105;205) to heat liquid in the upper section (3;103;203), **characterised in that** a pressure differential is generated across the filter (5;105;205) between the lower section (4;104;204) and the upper section (3;103;203) such that a portion of the vapour creates a pocket (2;102;202) of vapour in the lower section (4;104;204) below the filter (5;105;205) and the remaining portion passes through the filter (5;105;205) and is at least partially condensed in the upper section (3;103;203), and controlling the size of the vapour pocket (2;102;202) while maintaining a volume of liquid to be heated in the lower section (4;104;204), and withdrawing liquid from the upper section (3;103;203).

2. A method according to claim 1 **characterised in that** the liquid is water and the water in the upper section (3;103;203) above the filter (5;105;205) is heated by steam generated in the lower section (4;104;204) that passes through the filter (5;105;205) and condenses in the water above the filter (5;105;205) such that the filter (5;105;205) is bathed in steam.

3. A method according to claim 2 **characterised in that** a heater (6;106;206) is positioned in the lower section (4;104;204) for directly heating the water below the filter (5;105;205) and the size of the steam pocket (2;102;202) below the filter (5;105;205) is controlled so the heater (6;106;206) is covered by the water in the lower section (4;104;204).

4. A method according to claim 3 **characterised in that** the size of the steam pocket (2;102;202) is controlled to match the flow of incoming water to the lower section (4;104;204) to the mass flow through the filter (5; 105; 205) once a desired size of steam pocket (2;102;202) has been achieved.

5. A method according to claim 4 **characterised in that** the rate of mass flow through the filter (5;105;205) is dependent on a pressure differential across the filter (5;105;205).

6. A method according to claim 5 **characterised in that** the pressure differential is controlled by adjusting the power of the heater (6;106;206) such that increasing the power of the heater (6;106;206) accelerates boiling of the water in the lower section (4;104;204) and thus the rate of steam generation which in turn increases the pressure below the filter (5;105;205), and reducing the power of the heater (6;106;206) slows down boiling of the water in the lower section (4;104;204) and thus the rate of steam generation which in turn reduces the pressure below the filter (5;105;205).

7. A method according to claim 5 **characterised in that** the pressure differential is controlled in response to the water level in the lower section (4;1-4;204).

8. A method according to any one of claims 2 to 7 **characterised in that** the container (1;101;201) is initially filled with water to an upper level in the upper section (3;103;203) and, when the water in the upper section (3;103;203) is heated to a pre-determined temperature for a time sufficient to kill any bacteria by steam passing through the filter (5;105;205) from the lower section (4;104;204),' the water in the upper section (3;103;203) may be drawn off to a lower level at which water is introduced to the lower section (4;104; 204) .

9. A method according to claim 8 **characterised in that** incoming water flow is on/off in dependence on the upper and lower levels of water in the upper section (3;103;203) and the size of the steam pocket (2;102;202) in the lower section is controlled between upper and lower limits to accommodate the transfer of water in the form of steam vapour passing through the filter (5;105;205) from the lower section (4;104;204) to the upper section (3;103;203) and ensure the heating element (6;106;206) remains covered by water in the lower section (4;104;204).

10. A method according to claim 8 **characterised in that** incoming water flow is continuous in dependence on the rate water is drawn off from the upper section (3;103;203) and the size of the steam pocket (2;102;202) in the lower section (4;104;204) is controlled between upper and lower limits to accommodate the transfer of water in the form of steam vapour passing through the filter (5;105;205) from the lower section (4;104;204) to the upper section (3;103;203) and ensure the heating element (6;106;206) remains covered by water in the lower section (4; 104; 204).

11. Apparatus for carrying out the method according to any one of the preceding claims comprising a container (1;101;201) having a lower section (4;104;204) and an upper section (3;103;203) separated by a filter (5;105;205), an inlet (18;118;218) for supplying liquid to the lower section (4;104;204), an outlet (19;119;219) for withdrawing liquid from the upper section (3;103;203), means (6;106;206) for heating liquid in the lower section (4;104;204) to produce a vapour for passage through the filter (5;105;205) in dependence on a pressure differential generated across the filter (5;105;205) such that a portion of the vapour creates a pocket (2;102;202) of vapour in the lower section (4;104;204) below the filter (5;105;205) and the remaining portion passes through the filter (5;105;205) and is at least partially condensed in the upper section (3;103;203), and means (13;113;213) for controlling the size of the vapour pocket (2;102;202) while maintaining a volume of liquid to be heated in the lower section (4;104; 204).

12. Apparatus according to claim 11 including control means (13;113;213) operable to permit liquid to be withdrawn from the upper section (3;103;203) in response to the temperature of the liquid in the upper section (3;103;203) and to add liquid to the lower section (4;104;204) in response to the liquid level in the upper section (3;103;203).

13. Apparatus according to claim 12 **characterised in that** the heating means (6;106;206) is in direct contact with liquid in the lower section (4;104;204) and the control means 913;11;213) is operable to control the heating means (6;106;206) in response to the water level in the lower section (4;104;204).

14. Apparatus according to any one of claims 11 to 13 **characterised in that** incoming liquid to the lower section (204) is pre-heated by heat exchange with liquid in the upper section (203).

## Revendications

1. Un procédé de purification de liquide qui comprend les opérations consistant à créer un récipient (1;101;201) comportant une section inférieure (4;104;204) et une section supérieure (3;103;203) séparées par un filtre (5;105;205), amener du liquide à la section inférieure (4;104;204), chauffer le liquide contenu dans la section inférieure (4;104;204) afin de produire une vapeur pour passage à travers le filtre (5;105;205) afin de chauffer le liquide contenu dans la section supérieure (3;103;203), **caractérisé en ce qu'**un différentiel de pression est produit aux bornes du filtre (5;105;205) entre la section inférieure (4;104;204) et la section supérieure (3;103;203) de telle manière qu'une partie de la vapeur crée une poche (2;102;202;) de vapeur dans la section inférieure (4;104;204) en dessous du filtre (5;105;205) et que la partie restante passe à travers le filtre (5;105;205) et soit au moins en partie condensée dans la section supérieure (3;103;203), et réguler la dimension de la poche de vapeur (2;102;202) tout en maintenant un volume de liquide à chauffer dans la section inférieure (4;104;204), et retirer le liquide de la section supérieure (3;103;203).

2. Un procédé selon la revendication 1 **caractérisé en ce que** le liquide est de l'eau et **en ce que** l'eau contenue dans la section supérieure (3;103;203) au-dessus du filtre (5;105;205) est chauffée par la vapeur d'eau produite dans la section inférieure (4;104;204) qui passe à travers le filtre (5;105;205) et se condense dans l'eau au-dessus du filtre (5;105;205) de telle manière que le filtre (5;105;205) est baigné dans de la vapeur d'eau.

3. Un procédé selon la revendication 2 **caractérisé en qu'**un organe de chauffage (6;106;206) est mis en place dans la section inférieure (4;104;204) pour chauffer directement l'eau en dessous du filtre (5;105;205) et en ce que la dimension de la poche de vapeur (2;102;202) en dessous du filtre (5;105;205) est régulée de manière que l'organe de chauffage (6;106;206) soit recouvert par l'eau contenu dans la section inférieure (4;104;204).

4. Un procédé selon la revendication 3 **caractérisé en ce que** la dimension de la poche de vapeur (2;102;202) est régulée pour adapter le flux de l'eau arrivant vers la section inférieure (4;104;204) au flux massique à travers le filtre (5;105;205) une fois qu'à été obtenue une dimension désirée de la poche de vapeur (2,102;202)

5. Un procédé selon la revendication 4 **caractérisé en ce que** le taux de flux massique à travers le filtre (5;105;205) dépend d'un différentiel de pression aux bornes du filtre (5;105;205).

6. Un procédé selon la revendication 5 **caractérisé en ce que** le différentiel de pression est régulé en réglant la puissance de l'organe de chauffage (6;106;206) de telle manière qu'une augmentation de la puissance de l'organe de chauffage (6;106;206) accélère l'ébullition de l'eau contenue dans la section inférieure (4;104;204) et ainsi le taux de production de vapeur qui, à son tour, augmente la pression en dessous du filtre (5;105;205) et qu'une réduction de la puissance de l'organe de chauffage (6;106;206) ralentit l'ébullition de l'eau contenue dans la section inférieure (4;104;204) et ainsi la taux de production de vapeur qui, à son tour, réduit la pression en dessous du filtre (5; 105; 205).

7. Un procédé selon la revendication 5 **caractérisé en ce que** le différentiel de pression est régulé en réponse au niveau de l'eau dans la section inférieure (4;104;204).

8. Un procédé selon l'une quelconque des revendications 2 à 7 **caractérisé en ce que** le récipient (1;101;201) est initialement rempli d'eau jusqu'à un niveau supérieur dans la section supérieure (3;103;203) et **en ce que**, lorsque l'eau contenue dans la section supérieure (3;103;203) est chauffée à une température prédéterminée pendant une durée suffisante pour tuer toutes les bactéries par la vapeur d'eau passant à travers le filtre (5;105;205) depuis de la section inférieure (4;104;204), l'eau contenue dans la section supérieure (3;103;203) peut être retirée à un niveau inférieur auquel l'eau est introduite dans la section inférieure (4;104;204).

9. Un procédé selon la revendication 8 **caractérisée en ce que** le flux d'eau qui arrive est passant/non passant en dépendance des niveaux supérieur et inférieur de l'eau dans la section supérieure (3;103;203) et **en ce que** la dimension de la poche de vapeur d'eau (2;102;202) dans la section inférieure est régulée entre des limites supérieure et inférieure pour tenir compte du transfert de l'eau sous la forme de vapeur d'eau passant à travers le filtre (5;105;205) depuis la section inférieure (4;104;204) jusqu'à la section supérieure (3;103;203) et assurer que l'élément de chauffage (6;106;206) reste recouvert par l'eau contenue dans la section inférieure (4;104;204).

10. Un procédé selon la revendication 8 **caractérisé en ce que** le flux d'eau qui arrive est continu en dépendance du taux auquel l'eau est retirée de la section supérieure (3;103;203) et **en ce que** la dimension de la poche de vapeur d'eau (2,102;202) dans la section inférieure (4;104;204) est régulée entre des limites supérieure et inférieure pour tenir compte du transfert de l'eau sous la forme de vapeur d'eau passant à travers le filtre (5,105;205) depuis la section inférieure (4;104;204) jusqu'à la section supérieure (3;103;203) et assurer que l'élément de chauffage (6;106;206) reste recouvert par l'eau contenue dans la section inférieure (4;104;204).

11. Appareil pour mettre en oeuvre le procédé selon une quelconque des revendications précédentes comprenant un récipient (1;101;201) comportant une section inférieure (4;104;204) et une section supérieure (3;103;203) séparées par un filtre (5;105;205), une entrée (18;118;218) pour amener du liquide à la section inférieure (4;104;204)), une sortie (19;119;219) pour retirer du liquide de la section supérieure (3;103;203), des moyens (6;106;206) pour chauffer le liquide contenu dans la section inférieure (4;104;204) afin de produire une vapeur pour passage à travers le filtre (5;105;205) en dépendance d'un différentiel de pression produit aux bornes du filtre (5;105;205) de telle manière qu'une partie de la vapeur crée une poche (2;102;202) de vapeur dans la section inférieure (4;104;204) en dessous du filtre (5;105;205) et que la partie restante passe à travers le filtre (5;105;205) et soit au moins en partie condensée dans la section supérieure (3;103;203), et des moyens (13;113;213) pour réguler la dimension de la poche de vapeur (2;102;202) tout en maintenant un volume de liquide à chauffer dans la section inférieure (4;104;204).

12. Appareil selon la revendication 11 comprenant des moyens de commande (13;113;213) actionnables pour permettre à du liquide d'être retiré de la section supérieure (3;103;203) en réponse à la température du liquide contenu dans la section supérieure (3;103;203) et pour ajouter du liquide à la section inférieure (4;104;204) en réponse au niveau du liquide dans la section supérieure (3;103;203).

13. Appareil selon la revendication 12 **caractérisé en ce que** les moyens de chauffage (6;106;206) sont en contact direct avec le liquide contenu dans la section inférieure (4;104;204) et **en ce que** les moyens de commande (13;113;213) sont actionnables pour réguler les moyens de chauffage (6;106;206) en réponse au niveau de l'eau dans la section inférieure (4;104;204).

14. Appareil selon l'une quelconque des revendications 11 à 13 **caractérisé en ce que** le liquide qui arrive dans la section inférieure (204) est préchauffé par échange thermique avec le liquide contenu dans la section supérieure (203).

## Patentansprüche

1. Verfahren für die Reinigung von Flüssigkeiten, bei welchen ein Behälter (1;101;201) bereitgestellt wird, welcher einen unteren Abschnitt (4;104;204) und einen oberen Abschnitt (3;103;203) aufweist, die durch einen Filter (5;105;205) voneinander getrennt sind, eine Flüssigkeit in den unteren Abschnitt (4;104;204) eingeleitet wird, die Flüssigkeit in dem unteren Abschnitt (4;104;204) zum Erzeugen eines Dampfs für den Durchgang durch den Filter (5;105;205) erhitzt wird, um **dadurch** die Flüssigkeit im oberen Abschnitt (3;103;203) zu erwärmen, **dadurch gekennzeichnet, dass** ein Druckdifferential über den Filter (5;105;205) zwischen dem unteren Abschnitt (4;104;204) und dem oberen Abschnitt (3;103;203) erzeugt wird, derart, dass ein Teil des Dampfes eine Dampftasche (2;102;202) in dem unteren Abschnitt (4;104;204) unterhalb des Filters (5;105;205) bildet, und der verbleibende Anteil durch den Filter (5;105;205) hindurchströmt und mindestens teilweise in dem oberen Abschnitt (3;103;203) kondensiert wird, und dass die Größe der Dampftasche (2;102;202) gesteuert wird, während ein Volumen der zu erhitzenden Flüssigkeit in dem unteren Abschnitt (4;104;204) aufrecht erhalten wird, und dass Flüssigkeit von dem oberen Abschnitt (3;103;203) abgezogen wird.

2. Verfahren nach Anspruch 1, **dadurch gekennzeichnet, dass** die Flüssigkeit Wasser ist, und dass das Wasser in dem oberen Abschnitt (3;103;203) oberhalb des Filters (5;105;205) durch Dampf erhitzt wird, der in dem unteren Abschnitt (4;104;204) erzeugt wird und durch den Filter (5;105;205) hindurchströmt und in dem Wasser oberhalb des Filters (5;105;205) kondensiert, derart, dass der Filter (5;105;205) in Dampf gebadet wird.

3. Verfahren nach Anspruch 2, **dadurch gekennzeichnet, dass** ein Erhitzer (6;106;206) in dem unteren Abschnitt (4;104;204) angeordnet wird, um das Wasser unterhalb des Filters (5;105;205) direkt zu erhitzen, und dass die Größe der Dampftasche (2;102;202) unterhalb des Filters (5;105;205) gesteuert wird, derart, dass der Erhitzer (6;106;206) durch das Wasser in dem unteren Abschnitt (4;104;204) bedeckt ist.

4. Verfahren nach Anspruch 3, **dadurch gekennzeichnet, dass** die Größe der Dampftasche (2;102;202) derart gesteuert wird, dass der Strom einströmenden Wassers in den unteren Abschnitt (4;104;204) dem Massenstrom durch den Filter (5;105;205) angepasst wird, nachdem einmal eine gewünschte Größe der Dampftasche (2;102;202) erreicht wurde.

5. Verfahren nach Anspruch 4, **dadurch gekennzeichnet, dass** die Größe der Massenströmung durch den Filter (5;105;205) von einem Druckdifferential über den Filter (5;105;205) abhängt.

6. Verfahren nach Anspruch 5, **dadurch gekennzeichnet, dass** das Druckdifferential **dadurch** gesteuert wird, dass die Energie des Erhitzers (6;106;206) derart verstellt wird, dass eine Vergrößerung der Energie des Erhitzers (6;106;206) das Kochen des Wassers in dem unteren Abschnitt (4; 104; 204) beschleunigt und somit auch die Größe der Dampferzeugung, welche ihrerseits den Druck unterhalb des Filters (5;105;205) vergrößert, und dass die Verringerung der Energie des Erhitzers (6;106;206) das Kochen des Wassers in dem unteren Abschnitt (4;104;204) und somit die Größe der Dampferzeugung verlangsamt, welche ihrerseits den Druck unterhalb des Filters (5;105;205) verringert.

7. Verfahren nach Anspruch 5, **dadurch gekennzeichnet, dass** das Druckdifferential in Abhängigkeit von dem Wasserstand in dem unteren Abschnitt (4;104;204) gesteuert wird.

8. Verfahren nach einem der Ansprüche 2 bis 7, **dadurch gekennzeichnet, dass** der Behälter (1;101;201) anfänglich mit Wasser bis zu einem oberen Stand in dem oberen Abschnitt (3;103;203) gefüllt wird, und dass, wenn das Wasser in dem oberen Abschnitt (3;103;203) auf eine vorbestimmte Temperatur über eine Zeitspanne erwärmt ist, die ausreicht, jegliche Bakterien durch durch den Filter (5;105;205) von dem unteren Abschnitt (4;104;204) strömenden Dampf zu töten, das Wasser in dem oberen Abschnitt (3;103;203) auf ein unteres Niveau abgezogen werden kann, bei welchem Wasser in den unteren Abschnitt (4;104;204) eingeleitet wird.

9. Verfahren nach Anspruch 8, **dadurch gekennzeichnet, dass** die einströmende Wasserströmung in Abhängigkeit von den oberen und unteren Ständen des Wassers in dem oberen Abschnitt (3;103;203) ein- oder ausgeschaltet ist und die Größe der Dampftasche (2;102;202) in dem unteren Abschnitt zwischen einem oberen und einem unteren Grenzwert gesteuert wird, um die Übertragung von Wasser in Form von Wasserdampf auszugleichen, welcher durch den Filter (5;105;205) von dem unteren Abschnitt (4;102;204) in den oberen Abschnitt (3;103;203) strömt, und um zu gewährleisten, dass das Heizelement (6;106;206) in dem unteren Abschnitt (4;104;204) durch Wasser bedeckt bleibt.

10. Verfahren nach Anspruch 8, **dadurch gekennzeichnet, dass** die einströmende Wasserströmung kontinuierlich in Abhängigkeit von der Menge, in der Wasser aus dem oberen Abschnitt (3;103;203) abgezogen wird, ist, und dass die Größe der Dampftasche (2;102;202) in dem unteren Abschnitt (4;104;204) zwischen oberen und unteren Grenzwerten gesteuert wird, um die Übertragung von Wasser in Form von durch den Filter (5;105;205) von dem unteren Abschnitt (4;104;204) in den oberen Abschnitt (3;103;203) strömenden Wasserdampf auszugleichen und zu gewährleisten, dass das Heizelement (6;106;206) in dem unteren Abschnitt (4;104;204) durch Wasser bedeckt bleibt.

11. Vorrichtung zur Durchführung des Verfahrens nach einem der vorstehenden Ansprüche, umfassend einen Behälter (1;101;201) mit einem unteren Abschnitt (4;104;204) und einem durch einen Filter (5;105;205) abgetrennten oberen Abschnitt (3;103;203), einem Einlass (18;118;218) zum Einleiten von Flüssigkeit in den unteren Abschnitt (4;104;204) einen Auslaß (19;119;219) zum Abziehen von Flüssigkeit vom oberen Abschnitt (3;103;203), Mittel (6;106;206) zum Erhitzen der Flüssigkeit in dem unteren Abschnitt (4;104;204) zum Erzeugen eines Dampfes zum Hindurchströmen durch den Filter (5;105;205) in Abhängigkeit von einem Druckdifferential, welches über den Filter (5;105;205) erzeugt wird, derart, dass ein Teil des Dampfes eine Dampftasche (2;102;202) in dem unteren Abschnitt (4;104;204) unterhalb des Filters (5;105;205) bildet, und der verbleibende Teil durch den Filter (5;105;205) hindurchströmt und mindestens teilweise in dem oberen Abschnitt (3;103;203) kondensiert wird und Mittel (13;113;213) zum Steuern der Größe der Dampftasche (2;102;202), während ein Flüssigkeitsvolumen, welches in dem unteren Abschnitt (4;104;204) ist, werden soll, aufrechterhalten wird.

12. Vorrichtung nach Anspruch 11, umfassend Steuermittel (13;113;213), die betätigbar sind, um es zu ermöglichen, dass Flüssigkeit von dem oberen Abschnitt (3;103;203) in Abhängigkeit von der Temperatur der Flüssigkeit in dem oberen Abschnitt (3;103;203) abzuziehen und Flüssigkeit dem unteren Abschnitt (4;104;204) in Abhängigkeit von dem Flüssigkeitsstand in dem oberen Abschnitt (3;103;203) hinzuzufügen.

13. Vorrichtung nach Anspruch 12, **dadurch gekennzeichnet, dass** die Heizmittel (6;106;206) in direkter Berührung mit der Flüssigkeit in dem unteren Abschnitt (4;104;204) stehen, und dass das Kontrollmittel (13;113;213) betätigbar ist, um die Heizmittel (6;106;206) in Abhängigkeit von dem Wasserstand in dem unteren Abschnitt (4;104;204) zu steuern.

14. Vorrichtung nach einem der Ansprüche 11 bis 13, **dadurch gekennzeichnet, dass** die einströmende Flüssigkeit in den unteren Abschnitt (204) durch Wärmetausch mit der Flüssigkeit in dem oberen Abschnitt (203) vorgeheizt wird.
